**Europäisches Patentamt**

**European Patent Office**

**Office européen des brevets**

(11) Publication number: **0 046 345**
**A2**

# EUROPEAN PATENT APPLICATION

(21) Application number: **81303461.8**

(22) Date of filing: **28.07.81**

(51) Int. Cl.³: **G 01 N 15/07**

(30) Priority: **15.08.80 US 178489**

(43) Date of publication of application: **24.02.82**
**Bulletin 82/8**

(84) Designated Contracting States: **AT BE CH DE FR GB IT LI LU NL SE**

(71) Applicant: **ORTHO DIAGNOSTICS SYSTEMS INC., U.S. Route No. 202, Raritan New Jersey 08869 (US)**

(72) Inventor: **O'Connell, J. Garland, 28 Marlton Road, Waltham Massachusetts 02154 (US)**

(74) Representative: **Colgan, Stephen James et al, CARPMAELS & RANSFORD 43 Bloomsbury Square, London WC1A 2RA. (GB)**

(54) **Controlled hydrodynamic flow in flow cytometry systems.**

(57) Sheath fluid and sample fluid are both provided at respective constant mass flow rates through the flow cell of a flow cytometry system. Sample fluid is provided by means of a precision positive displacement pump utilizing a motor driven screw and syringe system. Sheath fluid is provided either using a similar positive displacement system, or utilizing a pressurized source and a differential pressure regulator in the sheath flow line.

ACTORUM AG

-1-

# Controlled Hydrodynamic Flow in Flow Cytometry Systems

## Field of the Invention

This invention relates to automated hematology systems employing the principles of flow cytometry to analyze blood cells in a hydrodynamically focused stream, and more particularly to apparatus for providing the sample stream at preferred rates and dimensions.

## Background of the Invention

Flow cytometry systems, for example the sort commercially available from applicant's assignee under various commercial designations, employ a flow cell assembly in which cells of the sample are forced to pass through a narrow zone in essentially single file relationship at a rapid rate. Focused coherent light is coupled to the narrow zone, and light scatter and fluorescent emissions from the cell are utilized extensively to study sundry parameters of the cell.

It is of profound importance to such systems that the characteristics of the sample stream, and in turn of the sheath fluid stream which surrounds it, be highly predictable and well-controlled. In particular, stream parameters of greatest interest are constancy of sample fluid velocity, volume rate of delivery through the flow cell assembly, fluid stream dimensions, and variability of these parameters as a function of ambient conditions.

It is an object of the present invention to provide apparatus for supplying sheath fluid and sample fluid to a flow cell in a fashion in which the sample fluid rate of delivery is known, repeatable, and uniform.

-2-

It is yet another object to provide such apparatus wherein sample fluid velocity is maintained substantially constant, independent of pressure required to deliver the fluid thereto.

It is yet another object to provide sample fluid and sheath fluid relationships whereby sample fluid stream dimensions are substantially smaller than previously were available.

It is yet another object to provide apparatus for furnishing sheath fluid and sample fluid, maintaining the foregoing objects, and doing so relatively independently of changes in ambient temperature, air pressure supply, or restrictions downstream of the flow cell.

A common prior art approach to delivery of sample and sheath fluid streams is utilization of pressurized supply "bottles" for each, pressure typically being maintained by an air pressure supply. Such systems do not, however, adequately meet the foregoing objects, and in any event utilization of pressurized supplies for both sheath fluid and sample fluid provides a relatively large lower limit (e.g., 15 to 20 microns) to the size of the fluid stream focusing zone.

## Summary of the Invention

In accordance with the principles of the present invention, sheath fluid is supplied in a fashion which insures delivery of sheath fluid at a constant mass flow rate through the flow cell. Sample fluid is provided at a constant mass flow rate by means of a precision positive displacement pump, preferably utilizing a syringe type displacement chamber, operated by a motor driven screw system. Sample fluid is provided to the syringe chamber, and as the syringe plunger is displaced, sample fluid is urged from the syringe, through a fluid damper, and into the flow cell.

Description of the Drawings

Fig. 1 shows a stylized version of a commercially available flow cytometric system, which is suitable for utilization in accordance with the principles of the present invention.

Fig. 2 shows a schematic diagram of a system for furnishing sample and sheath fluids to a flow cell assembly in accordance with the principles of the present invention.

Fig. 3 shows a side view of a preferred form of positive displacement pump for supplying sample to a flow cell in accordance with the principles of the present invention.

Fig. 4 shows a schematic diagram of a system embodying an alternative form of the principles of the present invention.

Best Mode For Carrying Out The Invention

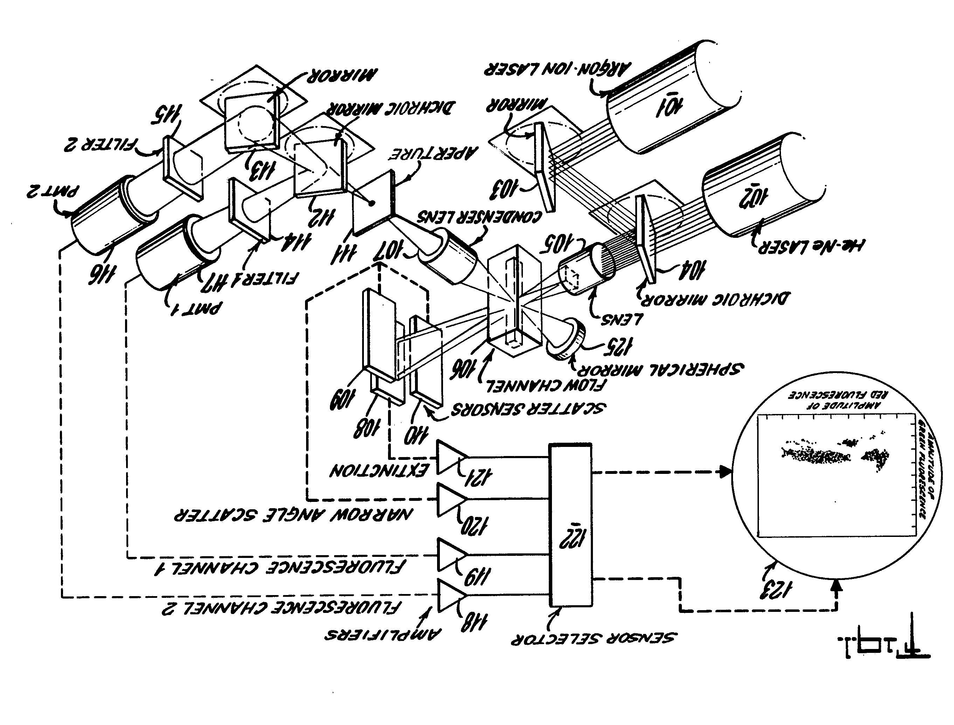

Referring first to Fig. 1, there is shown a stylized functional and structural representation of apparatus which may be utilized in accordance with the principles of the present invention. In fact, the apparatus of Fig. 1 depicts a particular system available commercially under the trade designation CYTOFLUOROGRAPH®, which is sold by the assignee hereof. The apparatus of Fig. 1 incorporates the principles of flow cytometry for cell analysis, and includes capacity for sensing fluorescent response of cells to specific types of illumination.

Focal to the Fig. 1 apparatus is a flow channel 106, wherein cells in liquid suspension are passed, in single file and at a rapid rate (e.g., 2500 cells per second) through a sensing zone. The sensing zone is defined by the intersection of cell flow and an incident light beam, typically focused coherent light from a gas laser. As the cell passes through the sensing zone, it interacts with incident light in a variety of ways. Some light, of course, is absorbed by the cell, other light is scattered at relatively narrow angles to the axis of incident light, and still other light is scattered at angles quite divergent from the axis of incident light, for example at right angles to the incident light. Furthermore, depending upon the nature of the cell itself, and any dyeing or staining to which the cell may previously have been subjected, flourescence emissions may occur.

Accordingly, photosensors located at various orientations with respect to the cell stream and the incident laser light permit detection of a unique set of responses for each given type of cell. Thus Fig. 1 includes an argon ion laser 101 and a helium neon laser 102, with the coherent light emitted by each being variously deflected via mirrors 103 and 104 and a lens 105 to the sensing zone of the flow channel 106. As is known in the art, the cell sample stream is carried in laminar fashion within a flowing fluid sheath, to insure that but a single cell will be illuminated in the sensing zone at a given time. Hence, as each cell is illuminated by light from the lens, interaction of the cell with the light may be sensed.

As shown in Fig. 1, an extinction sensor 108 detects the amount of light blocked by the cell, and forward light scatter is detected by photosensors 109 and 110 approximately in a cone of half-angle 20°. Electrical signals generated by the sensors 108, 109 and 110 are coupled to amplifiers 120 and 121, which present electrical signals of suitable amplitude and the like for subsequent analysis and/or display.

In the apparatus of Fig. 1, light which is emitted from the cell by virtue of a fluorescence response is sensed at right angles both to the direction of cell flow and to the axis of incident light. A spherical mirror 125 and a condenser lens 107 collects this light approximately in a cone of 'f-angle 20°, and couples this light through an aperture 111, successively to a dichroic mirror 112 and to a second mirror 113. A first color filter 114 (e.g., to pass relatively long wavelength light) conveys select light from the dichroic mirror 112 to photosensor 117 (e.g., a photomultiplier tube). A second filter 115 selectively passes light of a different color (e.g., relatively short wavelength light) from the second mirror 113 to a second photosensor 116. Electrical signals from sensors 116 and 117, in the form of pulses corresponding to light from respective cells, are coupled to amplifiers 118 and 119, thereby also to produce signals which are adapted for suitable processing.

As shown in the Fig. 1 embodiment, a sensor selector 122 generates output histograms utilizing signals from the amplifiers 118 through 121. For example, one useful form of output is a plot of amplitude of red fluorescence, from sensor 117, against amplitude of green fluorescence, from sensor 116. Such a histogram is shown at display 123, with each point on the histogram representing an individual cell. Clusters or aggregates of indicators on the histogram represent groups of cells of similar type. Quite evidently, those of ordinary skill in the art find it useful variously to generate histograms of narrow forward angle scatter versus intensity of green fluorescence, narrow forward angle scatter versus axial light extinction, and so forth.

In accordance with the principles of the present invention, it is highly desirable severely to constrict the cross-section of the sample fluid stream at the focal point of the flow channel 106, for example from the more common 20 microns or so in cross-section, down essentially to the cell size of 6 to 7 microns or so. Such narrow fluid stream vastly reduces the noise emergent from the irradiated sample, and hence renders considerably more practical the proposition of making many previously impractical or impossible measurements and discriminations. That is, it will be appreciated that noise as a function of spurious matter passing through the focal point of the fluid stream occurs roughly in proportion to the radius of the stream. Such·is also the case with respect to fluorescence related noise, due at least in part to free stain in the stream. Hence the desirability of reducing the fluid stream dimension as much as possible, while still accomodating the cells under examination.

The principles of the present invention facilitate considerable narrowing of the sample stream size and additionally facilitate doing so while substantially improving overall uniformity and controllability of the system.

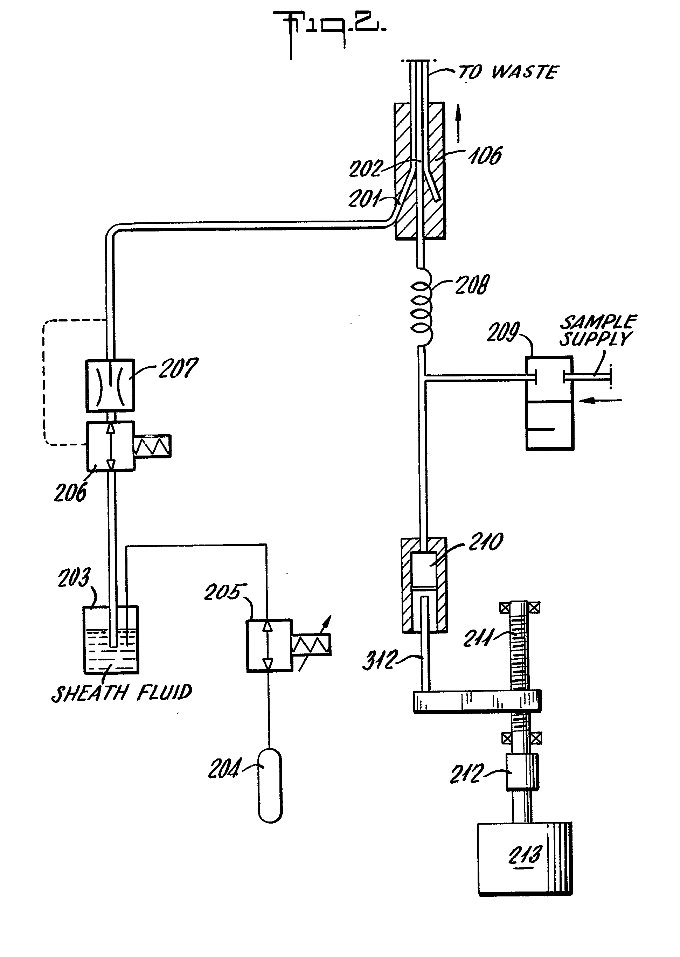

Referring to Fig. 2, which depicts an illustrative embodiment of the present invention, there is shown symbolically a flow cell assembly 106 wherein a fluid sheath 201 surrounds a sample fluid stream 202. Such assemblies are well-known to those of ordinary skill in the art. Sheath flow is provided from a sheath fluid supply bottle 203, which is pressurized from an air pressure supply 204 via an air pressure regulator 205. Sheath fluid from the bottle 203 passes to a differential pressure regulator 206 and a temperature controlled restriction 207 which the regulator 206 controls. A constant pressure drop is maintained across the restriction 207, irrespective of pressure changes either up or down the sheath flow stream. The result is a constant mass flow rate of sheath fluid 201 through the cell 106.

Sample is supplied through a valve 209, and is pressurized by a preci on gas tight syringe 210 whose plunger 312 displaces the sample fluid volume. The plunger 312 is stroked by a precision lead screw 211, driven by a permanent magnet synchronous gear motor 213 in conjunction with a universal coupling 212. The sample fluid 202 enters the flow cell assembly 106 from a fluid damper 208 which smooths any fluctuations which may occur in the sample stream as a function of motor imprecision.

The development of flow within the cell is obtained by first supplying pressure to the sheath fluid supply bottle 203. Once the mass flow rate of the sheath fluid is established, sample fluid is injected into the system through the sample valve 209. The sample fluid is, in turn, metered through the damper 208 and into the flow cell 106 as the syringe plunger 210 is displaced by operation of the motor 213 and screw 211. The result is a sample fluid stream 202 encased by sheath fluid 201 in the flow cell 106. The linear velocity of the sample fluid is determined solely by the sheath fluid mass flow rate, while the mass flow rate of the sample fluid is determined solely by the displacement of the sample pump, i.e., the displacement of piston 312. The sample fluid stream, within the flow cell, has dimensions determined by both the velocity and mass flow rate of the sample fluid. The system thus produces a sample fluid stream of very small dimension which is uniform and constant over time.

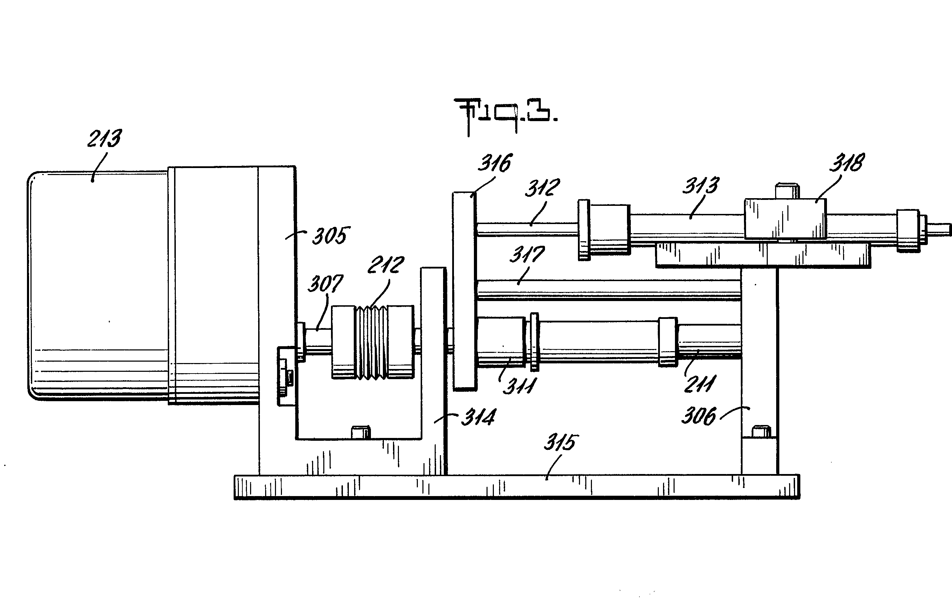

Fig. 3 shows a cross-sectional view of a preferred configuration for the motor 213, coupling 212, screw 211 and syringe 210. Support members 305, 306, and 314 are mounted to a base 315, and thereby establish relative spatial relationships between the respective parts. A synchronous motor 213 is affixed to the leftmost upright support 305, and the motor drive shaft 307 meets a universal coupling 212, which in turn drives the precision lead screw 211 between brackets 306 and 314. A rail 317 is carried between support members 306 and 314 intermediate the lead screw 211 and syringe 210, and a lead screw nut 311 is connected to a trolley 316, which rides on rail 317 and, on the opposite side thereof, is connected to syringe plunger rod 312. The plunger 312 is matable within the syringe barrel 313.

It will therefore be seen that rotational motive force from synchronous motor 213 is transferred by coupling 212 to the lead screw 211. As lead screw 211 is turned, the lead screw nut is translated thereupon, and correspondingly the syringe plunger 312 is moved into or out of the syringe barrel 313.

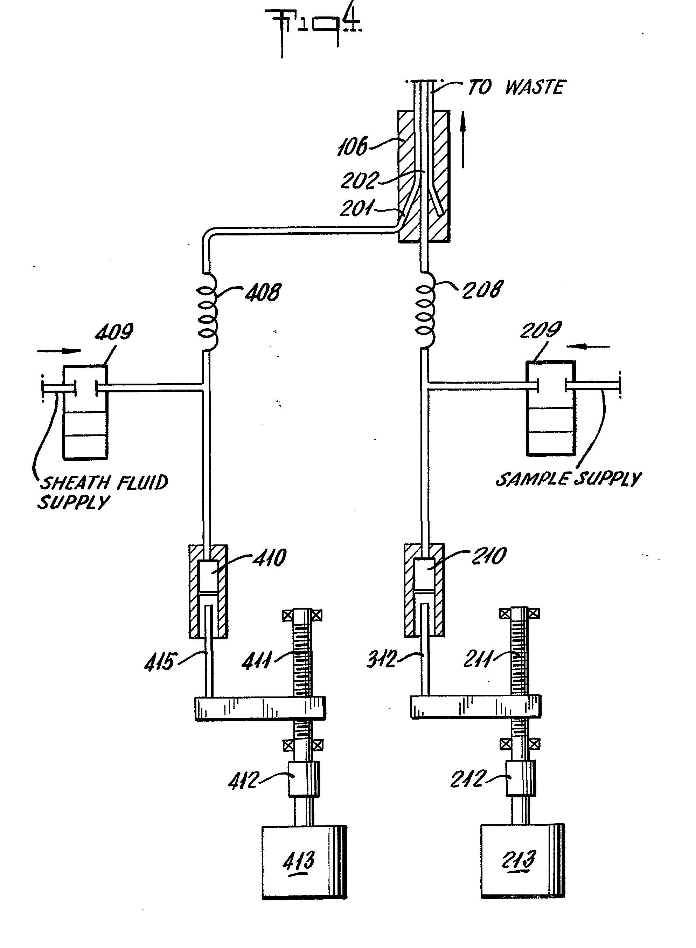

Fig. 4 shows an alternative embodiment of the principles of the present invention, wherein the sheath fluid line includes a pump means substantially similar to that utilized in the sample fluid line. Hence, in Fig. 4, the sheath volume line does not include the differential pressure regulator 206 and restricter 207, instead employing a motor 413, lead screw 411, and syringe combination 410/415 in similar fashion to the apparatus included in the sample line. Essentially, the Fig. 4 embodiment, like the Fig. 2 embodiment, provides sheath fluid at a constant mass flow rate. The embodiment of Fig. 4, however, by employing an instantly activated motor/pump rather than a thermally responsive pressure regulator and restricter, has a more rapid startup time. That is, the thermal aspects of the pressure regulator 206 and restricter 207 of the Fig. 2 embodiment require several minutes initially to heat up to achieve operational level. The embodiment of Fig. 4 has no such limitation.

Inasmuch as normal operation of flow cytometry systems require larger volumes of sheath fluid than sample fluid, the Fig. 4 embodiment no doubt will employ a syringe 410 having a larger volume capacity than the one 210 utilized by the sample fluid line. Likewise, the Fig. 4 embodiment employs separate sheath fluid lines and sample fluid lines which have operating parameters adapted to the desired constant mass flow rate of the respective fluids to be delivered to the flow cell assembly 106, but components of the respective lines are functionally analagous to one another in each respect.

In preferred embodiments of the principles of the present invention, the pump motors 213 and 413 are embodied either as a synchronous motor, as described, or as commercial variable speed, variable direction stepping motors, which are available from numerous commercial sources. A preferred design for the pump lead screw 211 and 411 is a two inch micrometer head thimble such as available from Starrett, Inc. The pump syringes 210/312 and 415/410 are readily commercially available, it being important only that the syringe housings be substantially rigid, and the plunger-syringe seal be quite tight, so that ambient gases do not infect the sample. In this regard, spring loaded teflon seals on the plungers 312 and 415 provide an ideal isolation of the sample fluid within the syringe.

-10-

In the event that an embodiment such as shown in Fig. 2 is to be employed for delivery of sheath fluid, a preferred regulator--restricter combination is available from Conoflow, Inc. under the trade designation H-31 regulator.

The line dampers shown in the respective pump lines are designed in accordance with the abilities of those of ordinary skill in the art (e.g., as simply as a tubing coil) to compensate for cyclic pulsation effects due to imprecise cycle-to-cycle pressure changes from the motor. The degree of damping to be provided will therefore be understood to be a function of the relative tolerance and variability of operation of the drive motors and the total volume to be so accommodated. Specific damper design considerations are dictated by these factors.

It will be understood that the foregoing sets forth preferred and illustrative embodiments of the principles of the present invention, but that numerous alternative embodiments will occur to those of ordinary skill in the art without departure from the spirit or scope of the present invention.

Claims:

1.   In a flow cytometry system having a flow channel carrying a hydrodynamically focused sample fluid stream enclosed within a sheath fluid stream, apparatus for supplying said streams under predetermined precise flow conditions comprising:

a)    a supply of sheath fluid;

b)    means for coupling sheath fluid to said flow channel at a constant mass flow rate;

c)    positive displacement precision pump means including
      .i)   syringe means comprising a plunger and a matable cylinder, and
      (ii)  means for displacing said plunger at predetermined rates within said cylinder;

d)    means for coupling sample fluid into said cylinder; and.

e)    means for delivering sample fluid from said cylinder to said flow channel under pressure from said plunger.

2.    Apparatus as described in claim 1 wherein said means for displacing comprises:

a)    a motor driving a lead screw, and

b)    nut means, threadedly matable with and translated by said lead screw, to displace said plunger within said chamber.

3. Apparatus as described in claim 2 wherein said means for delivering sample fluid includes flow oscillation damper means connected between said syringe means and said flow channel.

4. Apparatus as described in claim 1 and further including means for pressurizing said supply of sheath fluid, and wherein said means for coupling sheath fluid comprises sheath flow pressure regulation means.

5. Apparatus as described in claim 4 wherein said pressure regulation means includes differential pressure regulation means for sensing fluid pressure between two given points intermediate said sheath fluid supply and said flow channel, and flow constriction means, connected between said points, controlled by said pressure regulation means, for maintaining a constant pressure drop between said points.

6. Apparatus as described in claim 1 wherein said means for coupling sheath fluid comprises:

a) positive displacement precision pump means including
    (i) second syringe means comprising a second plunger and matable cylinder, and
    (ii) means for displacing said second plunger at predetermined rates within its matable cylinder;

b) means for coupling sheath fluid into said second syringe means; and

c) means for delivering sheath fluid from said second syringe means to said flow channel.

0046345

Fig. 1

Fig.2.

Fig.2.

4/4

Fig.4.

TO WASTE

106
202
201

408

409

208

209

SHEATH FLUID
SUPPLY

SAMPLE SUPPLY

410

210

415

411

312

211

412

212

_413_

_213_